# EUROPÄISCHE PATENTSCHRIFT

(11) **EP 0 976 600 B1**
(45) Veröffentlichungstag und Bekanntmachung des Hinweises auf die Patenterteilung: **29.09.2004**
(21) Anmeldenummer: 99114127.6
(22) Anmeldetag: 19.07.1999
(51) Int. Cl.: B60K 15/077

(54) **Kraftstofftank**
Fuel tank
Réservoir de carburant

(30) Priorität: 27.07.1998 DE 19833698
(43) Veröffentlichungstag der Anmeldung: 02.02.2000
(73) Patentinhaber: Kautex Textron GmbH & Co. KG., 53229 Bonn (DE)
(72) Erfinder: Hahner, Rainer, 53229 Bonn (DE); Walter, Rüdiger, 53123 Bonn (DE); Wagner, Axel, 53225 Bonn (DE); Puempel, Andreas, Essex, Ontario, N8M 3B8 (CA); Savoni, Lou, LaSalle, Ontario, N9J 3B3 (CA); Siekmann, Jim, Arnold, MO. 63010 (US)
(74) Vertreter: Koepsell, Helmut, Dipl.-Ing.

(56) Entgegenhaltungen:
- EP-A- 0 846 586
- PATENT ABSTRACTS OF JAPAN vol. 015, no. 212 (M-1118), 30. Mai 1991 (1991-05-30) & JP 03 057872 A (AISAN IND CO LTD), 13. März 1991 (1991-03-13)
- PATENT ABSTRACTS OF JAPAN vol. 015, no. 212 (M-1118), 30. Mai 1991 (1991-05-30) -& JP 03 057873 A (AISAN IND CO LTD), 13. März 1991 (1991-03-13)

## Beschreibung

Die Erfindung betrifft einen Kraftstofftank für ein Kraftfahrzeug gemäß dem Oberbegriff des Anspruches 1.

Das innerhalb des Kraftstofftankes angeordnete Reservoir ist normalerweise Teil einer Fördereinheit, die auch mit einer elektrischen Kraftstoffpumpe versehen ist, durch die der Motor des Kraftfahrzeuges mit Kraftstoff versorgt wird. Dabei hat das Reservoir, dessen Volumen wesentlich kleiner ist als das des Kraftstofftankes, insbesondere die Funktion sicherzustellen, daß auch bei ungünstigen Betriebszuständen, also beispielsweise bei einer langen Kurvenfahrt oder bei einer nicht horizontalen Position des Fahrzeuges, immer eine ausreichende Kraftstoffmenge sich im Bereich des Einlaufs der Pumpe befindet. Dies setzt das Vorhandensein einer gewissen Mindestmenge an Kraftstoff im Reservoir und somit ein entsprechendes Mindestvolumen desselben voraus.

Bei einstückig hergestellten Tanks, beispielsweise solchen, die aus thermoplastischem Kunststoff vorzugsweise mittels Extrusionsblasformen hergestellt werden, ergibt sich in vielen Fällen die Notwendigkeit, das Reservoir nach dem Herstellen des Tankes durch eine nachträglich in der Tankwandung angebrachte Öffnung in den Tank einzusetzen. Da es beispielsweise aus Gründen der Stabilität und der Dichtigkeit der nach dem Einbau des Reservoirs im Tank zu verschließenden Öffnung erwünscht ist, diese Öffnung so klein wie möglich zu halten, besteht bei bekannten derartigen Tanks der Nachteil, daß das durch diese Öffnung in den Tank einzuführende Reservoir ein entsprechend kleines Volumen aufweist, welches beispielsweise in der Größenordnung von 0,5 bis 1 Liter liegt. Dieses Volumen ist in vielen Fällen in Anbetracht der Dauer der vorerwähnten in der Praxis vorkommenden ungünstigen Betriebszustände, während welcher nur wenig oder kein Kraftstoff aus dem das Reservoir umgebenden Volumen in das Reservoir fließt, zu gering. Diesem Nachteil kann dadurch begegnet werden, daß das Reservoir wenigstens über Teilflächen seiner Begrenzungswandung verformbar ausgebildet ist derart, daß es, nachdem es in den Kraftstofftank eingeführt worden ist, eine Formänderung erfährt, die innerhalb des Kraftstofftankes zu einer Vergrößerung seines Volumens und zu einer Änderung seines Querschnittes führt. Eine solche Vorgehensweise ist jedoch in der Praxis nur dann anwendbar, wenn das Reservoir mit den zugehörigen Elementen in einer Weise ausgebildet ist, die eine einfache Handhabung sowohl beim Einsetzen im Tank als auch bei den Maßnahmen ermöglicht, die zu der gewünschten Volumenvergrößerung führen.

Ein Kraftstoffbehälter mit den Merkmalen des Oberbegriffs von Anspruch 1 ist aus der EP 0 846 586 A2 bekannt. Dort ist ein zur Montage in einem Kraftstoffbehälter vorgesehenes Reservoir beschrieben, das eine Wandung mit einem umlaufenden gummielastischen Einsatz aufweist. Hierdurch hat das Reservoir in einer Montagestellung einen kleinen Querschnitt, mit dem es sich durch eine Montageöffnung des Kraftstoffbehälters hindurchführen lässt. Nach der Montage wird der gummielastische Einsatz nach außen gedrückt, so dass das Reservoir nun ein größeres Volumen an Kraftstoff aufnehmen kann. Der gummielastische Einsatz ist in Einbaulage des Reservoirs bzw. des Schwalltopfs nach außen gestülpt bzw. in Richtung des größeren Volumens vorgespannt. Ein Herausnehmen des Reservoirs bzw. ein Einsetzen desselben in den Tank ist nur gegen die Vorspannung des elastischen Einsatzes möglich, was bei entsprechender Federkraft des Einsatzes umständlich ist. Ist die Vorspannung des Einsatzes nicht ausreichend groß gewählt, besteht die Gefahr, dass das Reservoir bei Betrieb des Kfz, insbesondere bei starken Schwallbewegungen des Kraftstoffs, nicht die hinreichende Stabilität aufweist.

Der Erfindung liegt die Aufgabe zugrunde, die Verwendung größerer Reservoirs zu ermöglichen, ohne daß dazu das Loch in der Wandung des Tanks zu vergrößern wäre, wobei das Reservoir einschließlich der zugehörigen Teile so ausgebildet sein sollte, daß es ohne Schwierigkeiten gehandhabt, d.h., problemlos in den Tank eingeführt und darin in seine endgültige Position und Form gebracht werden kann, ohne daß durch die dazu erforderlichen Maßnahmen die Funktion des Reservoirs beeinträchtigt würde. Dieses soll allen im praktischen Betrieb vorkommenden Beanspruchungen standhalten.

Diese Aufgabe wird mit den im Kennzeichen des Anspruches 1 angegebenen Mitteln gelöst.

Der Begriff "feste Bauteile" ist hier so zu verstehen, daß diese Bauteile die Steifigkeit aufweisen, die beispielsweise etwa der der Wandung des Tanks entspricht. Die festen Bauteile können ebenfalls aus Kunststoff bestehen und beispielsweise im Spritzgießverfahren hergestellt sein. Sie sind in jedem Fall merklich weniger elastisch verformbar als die Wandflächen des Reservoirs, deren elastische Verformung die Volumenvergrößerung bewirkt, und im Vergleich zu diesen Wandflächen im wesentlichen starr.

Die erfindungsgemäße Ausgestaltung ermöglicht es, das Reservoir als vorgefertigte Einheit auszubilden, die in einem einfachen Arbeitsgang in den Tank eingeführt und an diesem befestigt wird. Aufgrund der festen Bauteile an den beiden Enden brauchen keine besonderen Vorkehrungen getroffen zu werden, um das Reservoir mit der Tankwandung verbinden zu können.

Das Reservoir kann auch ohne weiteres so ausgebildet sein, daß es einen geschlossenen Raum begrenzt, dessen Wandungen lediglich mit den üblichen Durchgängen für den Kraftstoff und die elektrischen Leitungen für Pumpen und ggf. Füllstandssensor od. dergl. versehen sind.

Vorzugsweise wird sich das Reservoir zwischen dem Boden und der in einem Abstand davon vorhandenen oberen Wandung des Tankes befinden derart, daß das feste Bauteil an dem einen Ende des Reservoirs mit dem Boden des Tanks und das feste Bauteil am anderen Ende des Reservoirs mit der oberen Wandung des Tanks verbunden bzw. daran angebracht oder abgestützt ist. Es ist dann möglich, die seitlichen Wandflächen des Reservoirs über einen wesentlichen Teil seiner Längserstreckung verformbar auszubilden.

Vorzugsweise wird die die Volumenvergrößerung bewirkende Verformung des Reservoirs durch eine Verkürzung seiner axialen Erstreckung erreicht. Dabei kann die Anordnung so getroffen sein, daß das Reservoir vor seinem Einbringen in den Tank eine Länge aufweist, die größer ist als der Abstand zwischen den beiden einander gegenüberliegenden Wandbereichen des Tanks, zwischen denen das Reservoir in seiner Betriebposition angeordnet und gegebenenfalls eingespannt ist. Nachdem das Reservoir im Zuge des Einführens in den Tank durch eine axiale Beaufschlagung eine Verkürzung erfahren hat, die zu der gewünschten Volumenvergrößerung führt, kann es dann durch geeignete Mittel in seiner Betriebsposition gehalten werden, in welcher es sich zwischen zwei gegenüberliegenden Wandbereichen, z. B. dem Boden des Tankes und dem gegenüberliegenden Wandbereich, an dem seine eine stirnseitige Begrenzung befestigt ist, erstreckt.

Es wird im allgemeinen zweckmäßig sein, den verformbaren Bereich der Wandung des Reservoirs aus einem elastischen Material, beispielsweise Gummi oder einem geeigneten Kunststoff herzustellen. Voraussetzung ist lediglich, daß das verwendete Material ausreichend mechanisch beanspruchbar und gegenüber dem im Tank befindlichen Kraftstoff beständig ist. So kann der verformbare Wandbereich beispielsweise aus einem schlauchförmigen oder blasenförmigen Abschnitt bestehen, welcher an jedem Ende mit einem der vorzugsweise senkrecht zur Längsachse des Reservoirs verlaufenden festen Bauteilen aus beispielsweise hartgestelltem Kunststoff verbunden und von diesem gehalten ist, wobei das dem Boden des Tanks zugeordnete Bauteil zugleich auch als Halterung für die motorisch angetriebene Pumpe dienen kann.

Das ebenfalls als Verschluß des Reservoirs dienende Bauteil am anderen Ende des schlauchförmigen Wandteiles kann zugleich auch als Verschlußdeckel für die in der Wandung des Tankes befindliche Öffnung dienen. Ein verformbares Stützelement für den Schlauch oder die Blase oder dgl. kann ebenfalls zwischen den beiden Verschlußteilen angeordnet sein und diese verbinden. Während des Einführens in den Tank können zumindest Teilbereiche der Seitenwände des Reservoirs und/oder die Stützeinrichtung unter Spannung verformt sein. Dies wird z. B. dann der Fall sein, wenn das Reservoir in unbeanspruchtem Zustand seine endgültige Gestalt einnimmt. Dann müßte das Reservoir zum Zwecke des Einführens in den Tank so zusammengedrückt werden, daß sein größter Querschnitt nicht größer ist als die Tanköffnung. Andererseits besteht aber auch die Möglichkeit, das Reservoir so auszuführen, daß dieses in unbeanspruchtem Zustand, in welchem insbesondere seine Seitenwand und/oder die Stützeinrichtung nicht unter Spannung steht bzw. stehen, in den Tank eingeführt und dann z. B. durch axiale Verkürzung in die für den Betrieb erforderliche Gestalt gebracht wird. Bei elastischer Verformung des Reservoirs kann ein Betriebszustand desselben eintreten, bei welchem eine Kraft auf beide Verschlußteile ausgeübt wird. Da jedoch die für die Verformung des Reservoirs zur Vergrößerung seines Volumens erforderliche Kraft sehr gering ist, ist auch die daraus resultierende, auf die Verschlußteile uns damit die Tankwandungen einwirkende permanente Kraft sehr klein und somit vernachlässigbar.

Als besonders vorteilhaft hat sich eine Ausführungsform herausgstellt, bei welcher der verformbare Wandbereich des Reservoirs mit Falten versehen ist, die sich im Zuge der Formänderung, also der Volumenvergrößerung, zumindest teilweise öffnen. Dabei kann es zweckmäßig sein, daß das Reservoir aus zwei im wesentlichen kegelstumpfförmigen Abschnitten besteht, die an ihren Bereichen größten Durchmessers ineinander übergehen bzw. miteinander verbunden sind und die Falten des einen Abschnittes in Umfangsrichtung um die Hälfte der Breite einer Falte gegen die Falten des anderen Abschnittes versetzt sind.

Unabhängig davon, welche Gestalt das Reservoir in unbeanspruchtem Zustand aufweist, kann eine axiale, im Sinne einer Verlängerung des Reservoirs wirkende Spannung, die durch die Stützeinrichtung und/oder die Seitenwandungen aufgebracht wird, genutzt werden, das Reservoir zwischen Boden und gegenüberliegendem Wandbereich des Tankes einzuspannen. Dazu muß zumindest eine Restspannung vorhanden sein, die die beiden an den Enden befindlichen festen Bauteile im Sinne einer Vergrößerung ihres Abstandes beaufschlagt.

In jedem Fall kann bei Anwendung der Erfindung das Ausgangsvolumen des Reservoirs durch die Durchmesservergrößerung des verformbaren Wandbereiches eine Vergrößerung um den Faktor 1,5 bis 2 erfahren. Ein besonderer Vorteil der Erfindung ist auch darin zu sehen, daß ihre Anwendung keine ins Gewicht fallenden zusätzlichen Kosten verursacht.

In der Zeichnung ist im Schema ein Ausführungsbeispiel der Erfindung dargestellt. Es zeigen:
- Fig. 1: einen Längsschnitt durch einen Kraftstofftank mit einer außerhalb desselben angeordnetem Fördereinheit mit Reservoir in ihrer Ausgangsgestalt,
- Fig. 2: den Kraftstofftank gemäß Fig. 1 mit darin eingeführter Fördereinheit in ihrer Ausgangsgestalt,
- Fig. 3: den Kraftstofftank gemäß den Fig. 1 und 2 mit der Fördereinheit in ihrer eingebauten Position und verformtem Zustand,
- Fig. 4: einen Schnitt nach der Linie IV-IV der Fig. 1,
- Fig. 5: einen Schnitt nach der Linie V-V der Fig. 3.
- Fig. 6: eine den Fig. 1 - 3 entsprechende Darstellung einer zweiten Ausführung,
- Fig. 7: eine der Fig. 6 entsprechende Darstellung mit einer die Kraftstofförderung betreffenden Einzelheit,
- Fig. 8: im Schema einen Längsschnitt durch eine andere Ausführungsform eines Reservoirs im Zustand bei der Einführung in den Tank,
- Fig. 9: eine perspektivische Darstellung des Reservoirs in zumindest teilweise aufgeweitetem Zustand,
- Fig. 10: einen Schnitt nach der Linie X-X der Fig. 9,
- Fig. 11: eine der Fig. 7 entsprechende Darstellung des Reservoirs in seiner Funktionsgestalt innerhalb des Kraftstofftankes.

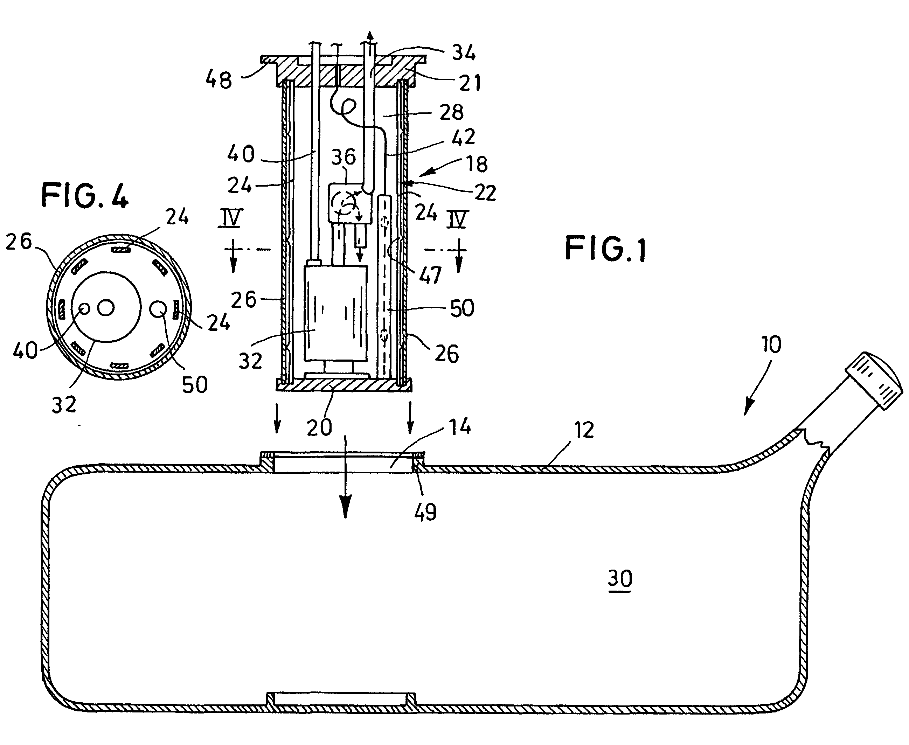

Gemäß den Figuren 1 bis 5 ist der in ein Kraftfahrzeug einzubauende Kraftstofftank 10, der einstückig im Extrusionsblasverfahren aus Kunststoff, aber ggf. auch auf andere Weise hergestellt sein kann, in seiner oberen Wandung 12 mit einer Öffnung 14 versehen, die durch Herausschneiden eines entsprechenden Teils der Wandung hergestellt sein kann. Durch diese Öffnung, die im allgemeinen, wenn auch nicht notwendigerweise, einen kreisförmigen Querschnitt aufweist, wird eine vorbereitete Fördereinheit 18 in den Tank 10 eingesetzt, die ein Reservoir 28 für Kraftstoff aufweist und im wesentlichen die Funktion hat, eine störungsfreie Versorgung des Motors des Kraftfahrzeuges mit Kraftstoff sicherzustellen.

Die Fördereinheit 18 ist mit einem festem Bodenteil 20 und einem festen Kopfteil 21 versehen, die das Reservoir 28 jeweils stirnseitig begrenzen. Beide Teile sind durch ein Stützgerüst 22 miteinander verbunden und gehalten, welches aus mehreren, z, B. acht Leisten 24 aus festem, elastisch verformbarem Material, also beispielsweise Federstahl oder Kunststoff, besteht. Diese Leisten sind über den Umfang der Fördereinheit 18 vorzugsweise in gleichem Abstand gegeneinander versetzt angeordnet. Außenseitig ist das aus diesen Leisten 24 bestehende Stützgerüst von einem schlauchförmigen Abschnitt 26 aus vorzugsweise elastisch verformbarem Material, beispielsweise Gummi oder Kunststoff umgeben. Dieser Schlauchabschnitt 26 begrenzt den wesentlichen Teil des eigentlichen Reservoirs, aus welchem Kraftstoff entnommen und dem Motor zugeführt wird. Der Schlauchabschnitt 26 ist sowohl mit dem Bodenteil 20 als auch mit dem Kopfteil 21 dicht verbunden, so daß das Reservoir, welches vorzugsweise einen annähernd kreisrunden Querschnitt aufweist, gegenüber der Umgebung, abgesehen von den Zu- und Ableitungen verschlossen ist.

Am plattenförmigen Bodenteil 20 der Fördereinheit 18 ist innerhalb des vom Schlauchabschnitt 26 umschlossenen Raums die mit einem Elektromotor versehene Kraftstoffpumpe 32 angeordnet, in deren zum Motor führende Leitung 34 innerhalb des Reservoirs in üblicher Weise ein Druckregler 36 angeordnet ist, von dem eine Rückführleitung 38 abgeht. Üblicherweise wird so verfahren, daß die Kraftstoffpumpe 32 kontinuierlich eine Kraftstoffmenge pro Zeiteinheit liefert, die größer ist als die Menge, die für den maximalen Betriebszustand des Motors erforderlich ist. Im Druckregler 36 erfolgt die Abzweigung der überschüssigen Kraftstoffmenge, die durch die Rückführleitung 38 zurückgeführt wird.

Die Leitung 34, durch die die für den jeweiligen Betriebszustand des Motors erforderliche Kraftstoffmenge zugeführt wird, ist flüssigkeitsdicht durch das kreisförmige Kopfteil 21 der Fördereinheit 18 hindurchgeführt. Das Kopfteil 21 ist weiterhin mit Durchgängen versehen, durch die elektrische Leitungen 40, 42 flüssigkeitsdicht hindurchgeführt sind, um die Kraftstoffpumpe 32 mit elektrischer Energie zu versorgen bzw. einen Füllstandsmesser 50, der den Füllstand im Reservoir 28 mißt, mit einem Anzeigesystem oder dgl. zu verbinden.

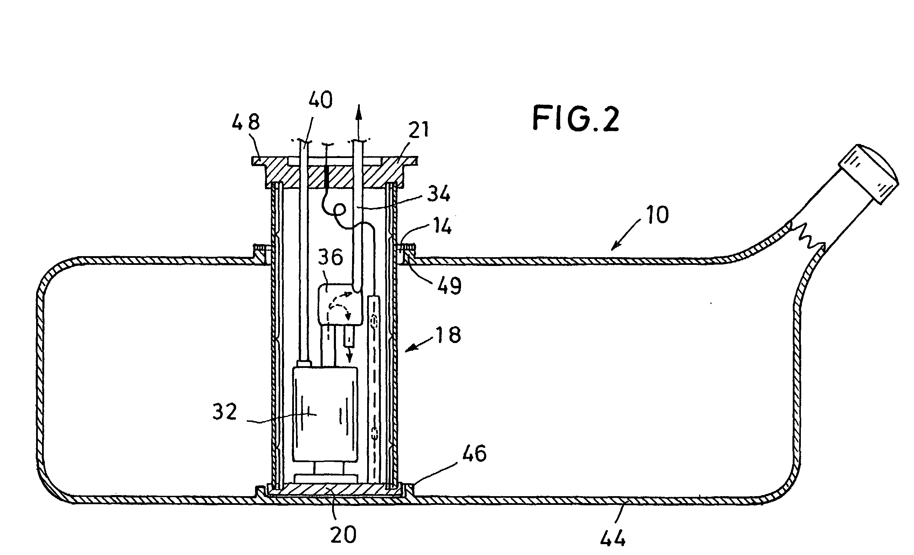

Die Anbringung der Fördereinheit 18 mit Reservoir 28 im Tank erfolgt in der Weise, daß die Fördereinheit 18 z. B. ausgehend von der in Fig. 1 dargestellten Position als Einheit durch die Öffnung 14 in der oberen Wandung des Tanks 10 zunächst in die Position gemäß Fig. 2 gebracht wird, in welcher das Bodenteil 20 der Fördereinheit 16 auf der unteren Wandung 44 des Tanks 10 aufsitzt, der dazu mit einer Halterung 46 versehen ist, die an die Kontur des Bodenteils 20 angepaßt ist und einen Formschluß zwischen Bodenteil und Tankwandung 44 bewirkt. Die Halterung 46 kann an der Bodenwandung einstückig angeformt, ggf. aber auch nachträglich z. B. durch die Öffnung 14 angebracht worden sein.

Ausgehend von der in Fig. 2 der Zeichnung dargestellten Anordnung der Fördereinheit 18 wird auf deren Kopfteil 21 eine axiale Kraft in Richtung auf das Bodenteil 20 zur Einwirkung gebracht, durch die die Leisten 24 des Stützgerüstes verformt werden derart, daß sie jeweils eine nach außen gerichtete Biegung erfahren, die zu einer entsprechenden radialen Aufweitung des das Stützgerüst 22 umgebenden schlauchförmigen oder blasenförmigen Abschnittes 26 führt. An die Leisten 24 des Stützgerüstes 22 sind nach außen gerichtete Falten 47 angeformt, durch die sichergestellt ist, daß die Leisten hinter der Einwirkung der axialen Kraft in jedem Fall sich nach außen biegen. Der Abschnitt kann natürlich auch aus unelastischem leicht verformbarem Material bestehen, welches von vornherein so bemessen ist, daß es unter der Einwirkung des sich aufweitenden Stützgerüstes ebenfalls aufgeweitet wird.

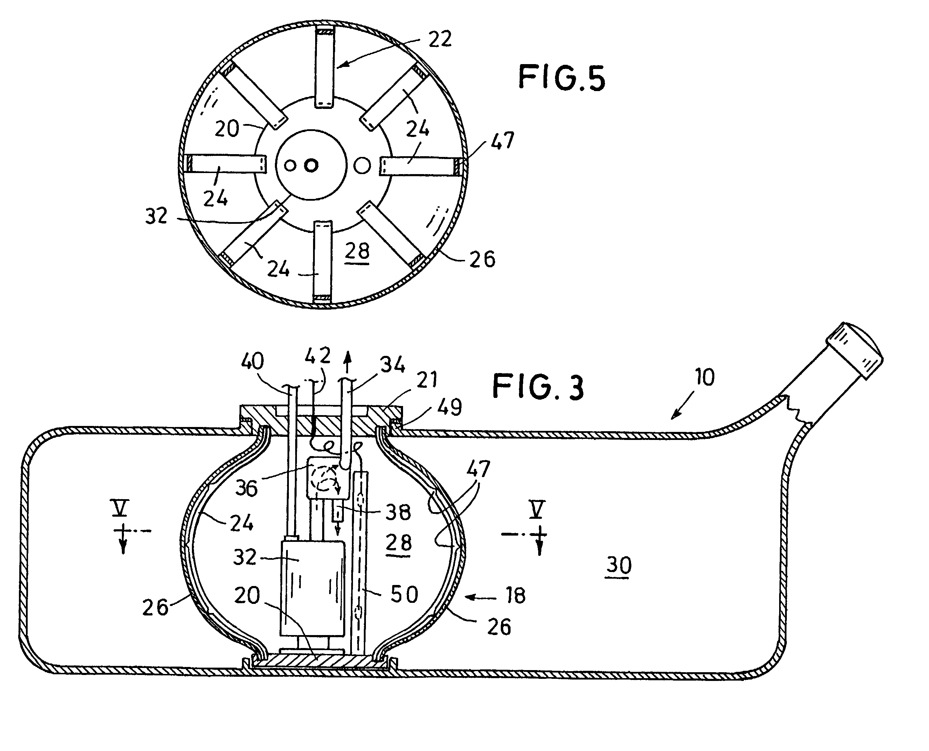

Die axiale Verschiebung wird durch das Auftreffen des am Kopfteil 21 außen angebrachten Flansches 48 auf der oberen Fläche der Tankwandung 12 bzw. des daran angebrachten Stutzens 49 begrenzt. In der Endposition, die in Fig. 3 dargestellt ist, dient das Kopfteil 21 zugleich als Deckel, welcher die Öffnung 14 im Tank verschließt. Die Befestigung des Kopfteils 21 am Tank 10 bzw. dessen Wandung 12 kann in üblicher nicht dargestellter Weise geschehen, beispielsweise durch eine Überwurfmutter, einen Bajonettverschluß oder dgl.

Wie einleitend beschrieben, kann das Reservoir auch so ausgestaltet sein, daß es in unbeanspruchtem Zustand die Gestalt oder nahezu die Gestalt aufweist, die es auch während des Betriebes einnimmt, so daß es zum Einführen durch die Öffnung 14 in den Tank hinein unter Spannung verformt wird, um auf den für das Einführen erforderlichen Querschnitt gebracht zu werden. Bei dem z. B. durch das Stützgerüst bewirkten Ausdehnen innerhalb des Tankes kann dann eine Restspannung in der Wandung und/oder im Stützgerüst verbleiben, mittels welcher das Reservoir zwischen den beiden einander gegenüberliegenden Wandbereichen des Tanks eingespannt wird.

Es ist natürlich auch möglich, die Seitenwandung des Reservoirs so auszuführen, daß sie, gegebenfalls ohne elastisch zu sein, verformbar ist, und eine Aufweitung erst durch den in das Reservoir einlaufenden Kraftstoff erfolgt, wenn kein sich entsprechend verformendes Stützgerüst vorhanden ist.

Fig. 3 zeigt den fertigen Kraftstofftank 10 mit darin nachträglich eingebauter Fördereinheit 18, die das Reservoir 28 aufweist, dessen Volumen wesentlich größer ist als der der Fördereinheit 18 in unverformtem Zustand gemäß den Fig. 1 und 2.

Nach dem Einbau der Fördereinheit 18 in den Tank behalten die Komponenten der Fördereinheit 18 ihre in Fig. 3 dargestellte Positionen, die die gewünschte Vergrößerung des Reservoirs 28 bewirken, im allgemeinen während der gesamten Lebensdauer des Tanks bei. Da das Reservoir nach dem Einbau seine Gestalt und damit sein Volumen nicht mehr verändert, ist es ohne weiteres möglich, durch einen innerhalb des Reservoirs vorhandenen Füllstandmesser 50 die Menge des im Reservoir vorhandenen Kraftstoffes zumindest bezüglich bestimmter Füllstände exakt zu erfassen.

Die innerhalb des Reservoirs vorgesehene elektrische Kraftstoffpumpe kann in bekannter Weise zweistufig ausgeführt sein, wobei die erste Stufe der Pumpe den Kraftstoff aus dem die Fördereinheit 18 bzw. das Reservoir 28 umgebenden Raum 30 des Tanks 10 in das Reservoir hineinfördert. Dazu kann das Bodenteil 20 der Fördereinheit 18 mit einem verschließbaren Durchlaß versehen sein, durch welchen der Kraftstoff in das Reservoir gesaugt wird. Die zweite Stufe der Pumpe saugt den Kraftstoff aus dem Reservoir an und fördert ihn zum Motor, wobei, wie bereits erwähnt, im Druckregler 36 die überschüssige Kraftstoffmenge abgezweigt und wieder in das Reservoir zurückgeführt wird.

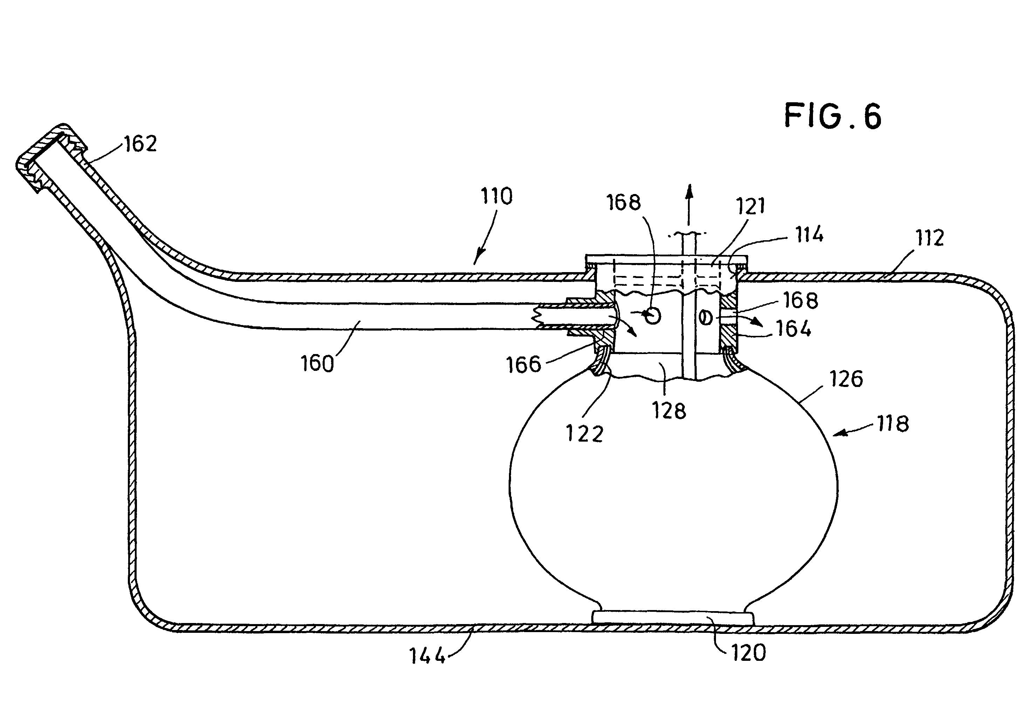

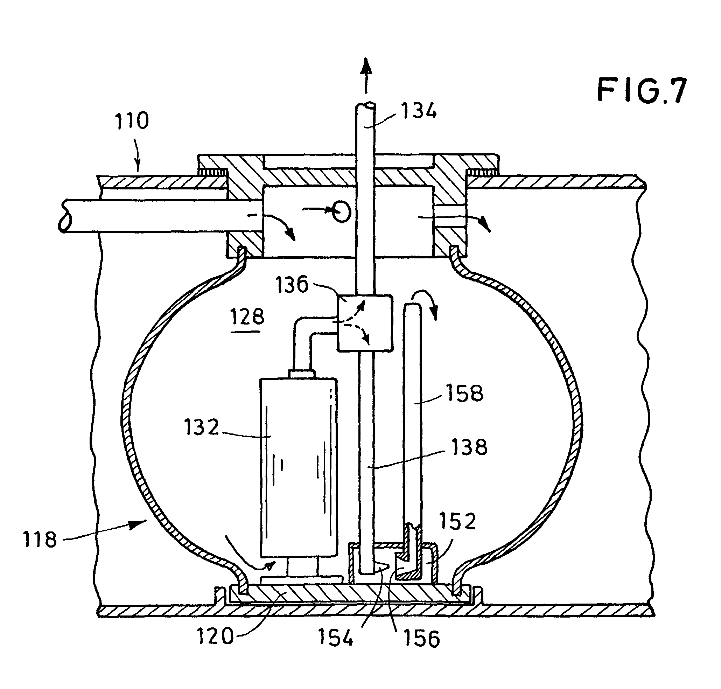

Eine andere Möglichkeit ist in Fig. 7 dargestellt, die weitgehend der Ausführungsform gemäß Fig. 6 entspricht, so daß gleiche Teile auch mit gleichen Bezugszeichen versehen sind, die jedoch, wie in Fig. 7, um 100 größer sind als in den Figuren 1 bis 5. Das Bodenteil 120 der Fördereinheit 118 ist mit einer Kammer oder Ausnehmung 152 versehen, die mit dem Tankvolumen außerhalb des Reservoirs 128 in Verbindung steht. Die Rückführleitung 138 ist in diese Kammer 152 hineingeführt, wobei sie gegenüber dem Bodenteil 120 abgedichtet ist. Sie läuft in eine Treibdüse 154 aus, die innerhalb der Kammer 152 gegenüber der im wesentlichen vertikalen Rückführleitung 138 abgewinkelt und zur Bildung einer Saugstrahlpumpe in üblicher Weise einer Fangdüse 156 gegenüberliegend angeordnet ist. An letztere ist ein Steigrohr 158 angeschlossen, welches flüssigkeitsdicht durch das Bodenteil 120 hindurchgeführt ist und im oberen Bereich des Reservoirs 128 endet. Somit wird in üblicher Weise die Strömungsenergie des durch die Rückflußleitung 138 zurückströmenden Kraftstoffes benutzt, um Kraftstoff aus dem Tankvolumen außerhalb des Reservoirs 128 in letzteres zu fördern. Bei dieser Ausführungsform kann das Reservoir 128 auch im Bereich des Bodenteils 120 gegenüber dem umgebenden Raum des Tanks 110 dicht verschlossen sein, so daß eine Füllstandmessung innerhalb des Reservoirs ohne weiteres möglich ist.

Die Ausführungsform gemäß Fig. 6 entspricht in allen wesentlichen Teilen der Ausführungsform gemäß den Fig. 1 - 5, so daß gleiche Teile auch mit gleichen, jeweils um 100 höheren Bezugszeichen versehen sind.

Ein wesentlicher Unterschied gegenüber der Ausführungsform gemäß den Fig. 1 - 5 besteht darin, daß der Tank 110 mit einem Füllrohr 160 versehen ist, welches sich vom Einfüllstutzen 162 des Tanks bis zur Fördereinheit 118 erstreckt, deren Kopfteil 121 aus festem Material mit einem rohrförmigen Fortsatz 164 versehen ist, der im wesentlichen koaxial zur Längsachse der Fördereinheit 118 verläuft und unterseitig mit dem aufweitbaren Schlauchabschnitt 126 und dem Stützgerüst 122 verbunden ist. Dieser rohrförmige Fortsatz 164 des Kopfteiles 121 ist mit einem Loch 166 versehen, welches das Ausströmende des Füllrohres 160 aufnimmt, so daß beim Befüllen des Tankes 110 der durch das Füllrohr 160 zugeführte Kraftstoff zunächst in das Reservoir 128 der Fördereinheit 118 strömt. Somit ist in jedem Fall auch dann, wenn nur geringe Kraftsstoffmengen in den Tank 110 eingeführt werden, eine Gewähr dafür gegeben, daß sich Kraftstoff innerhalb des Reservoirs und damit zwangsläufig im Bereich der Ansaugöffnung der Kraftstoffpumpe, die den Kraftstoff aus dem Reservoir ansaugt, befindet.

Der rohrförmige Fortsatz 164 ist mit zusätzlichen Löchern 168 versehen, durch welche während des Betankens bei gefülltem Reservoir überschüssiger Kraftstoff aus letzterem in den umgebenden Bereich 130 des Kraftstofftankes abfließen kann.

Die Anordnung gemäß Fig. 6 ist insbesondere vorteilhaft für die Erstbetankung von Kraftfahrzeugen, für die im allgemeinen ein besonderer Kraftstoff verwendet wird, wobei aus Kostengründen durchweg nur eine geringe Kraftstoffmenge in den Tank gegeben wird, die beispielsweise nur 1 bis 2 Liter betragen kann. Es ist in jedem Fall eine Gewähr dafür gegeben, daß auch bei derartig geringen Kraftstoffmengen immer Kraftstoff im Ansaugbereich der den Kraftstoff zum Motor fördernden Pumpe vorhanden ist. Außerdem ist bei dieser Anordnung auch in anderen Fällen, also beispielsweise dann, wenn der Tank beim normalen Betrieb des Kraftfahrzeugs völlig entleert worden ist, sichergestellt, daß eine geringe Menge Kraftstoff ausreicht, um eine Förderung von Kraftstoff zum Motor zu bewirken.

Die Ausführung gemäß Fig. 6 erlaubt auch die Anwendung einer Fördereinheit, deren Wandung 26 bzw. 126 unter der Einwirkung des innerhalb des Reservoirs befindlichen Kraftstoffes aufgeweitet wird. Dabei wäre es möglich, ohne ein zusätzliches Stützgerüst auszukommen.

Es ist auch eine Ausgestaltung denkbar, bei welcher ein selbsttragender flexibler schlauchförmiger oder blasenförmiger Abschnitt verwendet wird, dessen Wandung verstärkte Bereiche aufweist, die die Funktion der Leisten des Stützgerüsts 22 übernehmen, so daß im Ergebnis lediglich ein einstückiges Wandteil, ggf. mit integriertem Stützgerüst, sich zwischen den beiden stirnseitigen Teilen 21 bzw. 121 und 20 bzw. 120 der Fördereinheit 18 bzw. 118 erstrecken würde.

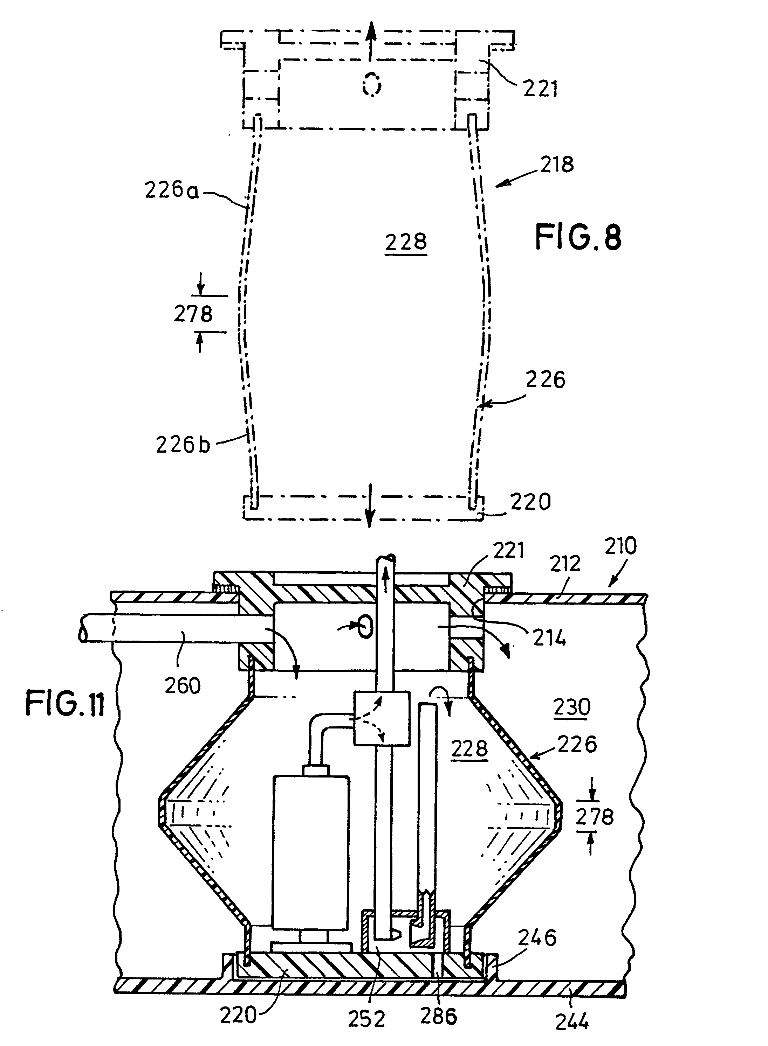

Das Beispiel gemäß den Fig. 8 - 11 zeigt eine Ausführung, deren Reservoir an seinem Umfang durch einen Hohlkörper begrenzt ist, dessen Wandung mit einer bestimmten Faltengeometrie versehen ist, wobei die einzelnen Falten so angeordnet und ausgebildet sind, daß das Reservoir eine Erweiterung erfährt, wenn die Falten sich öffnen. Ansonsten stimmt diese Ausführungsform mit jener gemäß den Fig. 6 und 7 überein, so daß in den Fig. 8 - 11 gleiche Teile auch mit gleichen, jedoch um 100 höheren Bezugszeichen als in den Fig. 6 und 7 versehen sind.

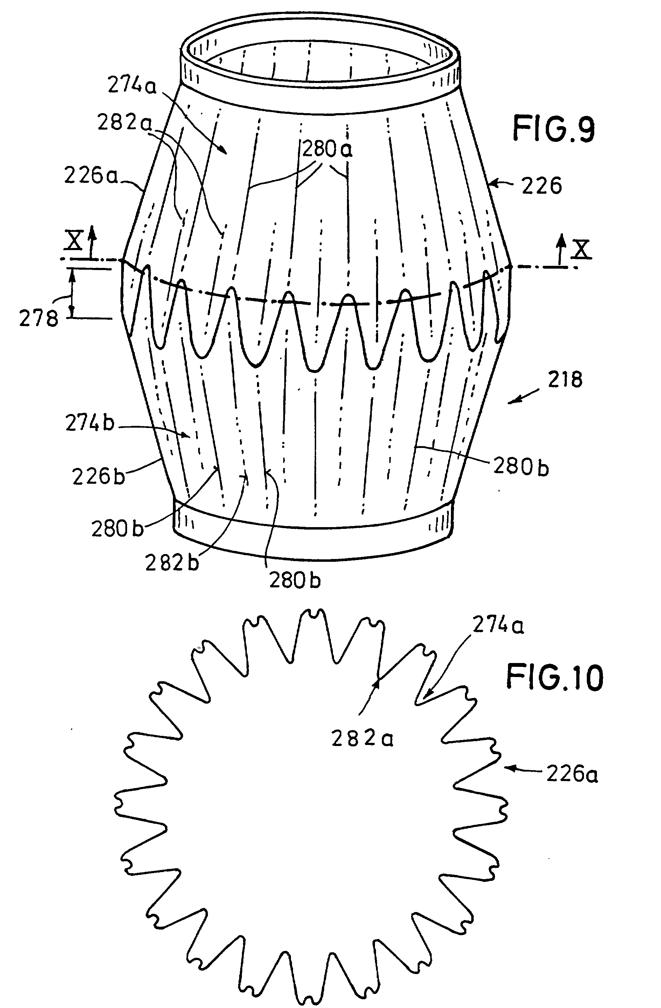

In Fig. 8 ist die Fördereinheit 218 mit Reservoir 228 in einer gestreckten Gestalt dargestellt, in welcher Kopfteil 221 und Bodenteil 220 einen größeren Abstand voneinander aufweisen als dann, wenn das Reservoir seine Funktionsgestalt aufweist, die z. B. Fig. 11 dargestellt ist. Nach dem Einsetzen in den Kraftstofftank 210, also ausgehend von der Lage entsprechend jener der Fig. 2, erfahren der Hohlkörper und damit das Reservoir 228 eine Formänderung, durch welche die Wandung 226 des faltenbalgartig ausgebildeten Hohlkörpers eine Vergrößerung ihres Durchmessers erfährt, wobei gleichzeitig die Falten 274a, 274b (vgl. Fig. 9) aufgeweitet werden. Am Ende der Formänderung weiset das Reservoir seine vorerwähnte Funktionsgestalt auf, die es während des Betriebes des Kraftfahrzeuges, in welchem der Kraftstofftank eingebaut ist, beibehält.

Im Detail ist die Anordnung so getroffen, daß die Wandung 226 des Reservoirs 228 aus zwei im wesentlichen kegelstumpfförmigen Abschnitten 226a, 226b besteht derart, daß die beiden Abschnitte 226a, 226b an ihren Enden größten Durchmessers miteinander verbunden sind. Der Begriff "kegelstumpfförmig" ist hier natürlich so zu verstehen, daß er sich auf eine gedachte Mantelfläche bezieht, die beispielsweise durch die äußeren Scheitellinien 280a bzw. 280b der Falten definiert ist, da die Falten das Vorhandensein einer glatten Mantelfläche ausschließen, mit welcher ein Kegelstumpf normalerweise versehen ist.

Bei dem in der Zeichnung dargestellten Ausführungsbeispiel sind beide Abschnitte 226a, 226b gleich lang und die Falten beider Abschnitte 226a, 226b um eine halbe Faltenbreite in Umfangsrichtung des Reservoirs 228 gegeneinander versetzt angeordnet derart, daß im Übergangsbereich 278 zwischen den beiden Abschnitten 226a, 226b die äußeren Scheitellinien 280a der Falten 274a des Abschnittes 226a jeweils übergehen in die inneren Scheitellinien 282b der Falten 274b des Abschnittes 226b. Demzufolge setzen sich im Übergangsbereich 278 die äußeren Scheitellinien 280b der Falten 274b des Abschnittes 226b jeweils in die inneren Scheitellinien 282a der Falten 274a des Abschnittes 226a fort. Diese Anordnung, bei welcher die äußeren Scheitellinien des einen Abschnittes 226a bzw. 226b in die inneren Scheitellinien des jeweils anderen Abschnittes sich fortsetzen, hat die insbesondere aus Fig. 9 erkennbare Ausgestaltung des Übergangsbereiches 278 zur Folge, in welchem die Endbereiche der Falten des oberem Abschnitts 226a und die der Falten des unteren Abschnittes 226b einander überlappen. Diese Faltengeometrie ermöglicht auf besonders einfache Weise das Aufweiten der Falten 274a, 274b bei gleichzeitiger Durchmesser- und Volumenvergrößerung des Reservoirs 228, wobei der Kegelwinkel der beiden Abschnitte 226a, 226b eine Änderung im Sinne einer Vergrößerung erfährt.

Der die Wandung 226 des Reservoirs 228 bildende Hohlkörper kann einstückig aus Kunststoff, beispielsweise Polypropylen, Polyamid oder HD-Polyethylen im Blasverfahren hergestellt werden. Dabei wird zweckmäßigerweise so verfahren, daß der Hohlkörper in der Blasform die Gestalt erhält, die der Funktionsgestalt des Reservoirs entspricht, die beispielsweise in Fig. 11 dargestellt ist. Dies bedeutet, daß das Reservoir 228 zum Zwecke des Einführens in den Kraftstofftank durch Aufbringung entsprechender Zugkräfte in eine gestreckte Form gebracht wird, bei welcher der maximale Durchmesser des Reservoirs nicht größer ist als die in der Wandung 212 des Tankes 210 befindliche Öffnung 214. Spätestens nach Erreichen der Position, in welcher das Bodenteil 220 auf dem Boden 244 des Tankes 210 aufsitzt, (vgl. Fig. 2), wird das Reservoir völlig freigegeben, so daß es sich unter der Einwirkung der Spannung, die vorher bei der Streckung in die Gestalt gemäß Fig. 8 entstanden war, das Reservoir selbsttätig wieder seine Ausgangsgestalt einnimmt, welche der Funktionsgestalt entspricht, die in Fig. 11 dargestellt ist. Selbstverständlich kann ein teilweises Aufweiten des Reservoirs auch bereits während des Einsetzens in den Kraftstofftank 210 erfolgen. Jedenfalls läßt sich auf die vorbeschriebene Weise erreichen, daß das Reservoir bzw. dessen Wandung 226 während des üblichen Betriebes, dessen Länge normalerweise der Lebensdauer des Tankes und des Reservoirs entspricht, praktisch spannungsfrei ist und somit die Wandung 226 dauernd frei von Beanspruchung bleibt.

In dem in der Zeichnung dargestellten Ausführungsbeispiel sind in jedem Abschnitt 226a, 226b zwanzig Falten vorhanden. Die Ausgestaltung des Übergangsbereichs 278 erleichtert, wie bereits erwähnt, eine Änderung der Gestalt des Reservoirs 228. Beim Aufweiten des Reservoirs, das mehr oder weniger selbsttätig erfolgt, kann der Durchmesser des Mittelbereiches von z. B. 152 mm auf ca. 200 mm vergrößert werden, wobei die Länge des Reservoirs von 200 mm auf 180 - 170 mm verkürzt wird. Die Dicke der Wandung 226 des Hohlkörpers kann beispielsweise 0,8 - 1,5 mm betragen.

Die vorbeschriebene Faltengeometrie bewirkt auch eine ausreichende Eigensteifigkeit des Reservoirs bzw. der Wandung 226 desselben, so daß es normalerweise nicht notwendig sein wird, zusätzlich eine Stützeinrichtung vorzusehen, obgleich die Anbringung einer solchen nicht ausgeschlossen sein soll.

Die Kammer 252 steht mit dem Tankvolumen 230 außerhalb des Reservoirs 228 in Verbindung, wie dies auch beim Ausführungsbeispiel gemäß Fig. 7 der Fall ist. Dazu kann das Bodenteil 220 mit einem Durchgang 286 versehen sein, der sich in der Schnittebene der Fig. 8 befindet. Auch bei dem Ausführungsbeispiel gemäß Fig. 7 kann die Verbindung zwischen dem Reservoir 128 und dem außerhalb desselben befindlichen Tankvolumen durch einen Durchgang hergestellt sein, der in gleicher Weise positioniert ist.

Das Ausführungsbeispiel gemäß den Fig. 8 - 11 kann auch mit einer Einrichtung für die Zuführung und Förderung des Kraftstoffes versehen sein, die der Ausführung gemäß den Fig. 1 - 6 entspricht, wie überhaupt gelten soll, daß die Wahl der Mittel für Zuleitung, Ableitung und Förderung des Kraftstoffes in Abhängigkeit von den jeweiligen Erfordernissen oder Gepflogenheiten getroffen werden kann, ohne daß dadurch der Rahmen der Erfindung verlassen würde.

## Patentansprüche

1. Kraftstofftank für ein Kraftfahrzeug, der mit einem darin angeordneten kleineren Reservoir (28; 128) versehen ist, das durch eine verschließbare Öffnung (14; 114) in der Wandung (12; 112) des Kraftstofftanks (10; 110) in letzteren eingesetzt und mit ihm verbunden ist, wobei das Reservoir (28; 128) wenigstens über Teilflächen seiner Begrenzungswandung verformbar ausgebildet ist, derart, dass es, nachdem es zumindest teilweise in den Kraftstofftank (10; 110) eingeführt worden ist, eine Formänderung erfährt, die zu einer Vergrößerung seines Volumens innerhalb des Kraftstofftankes und zu einer Änderung seines Querschnittes führt, derart, dass der größte Querschnitt des Reservoirs (28; 128) in seiner Betriebsposition größer ist als der für das Einführen des Reservoirs verfügbare Querschnitt der Öffnung im Kraftstofftank, wobei das vorzugsweise einen runden Querschnitt aufweisende Reservoir (28; 128) an seinen beiden Enden, von denen ein in Einbaulage unteres Ende gegen eine Tankwandung abgestützt ist, durch feste Bauteile (20, 21; 120, 121) begrenzt ist und die verformbaren Wandflächen im Bereich zwischen den festen Bauteilen an den Enden des Reservoirs angeordnet sind, **dadurch gekennzeichnet, dass** das das Reservoir (28; 128) in Einbaulage oberseitig begrenzende feste Bauteil zugleich als Verschluss für die Öffnung (14; 114) in der Tankwandung (12; 112) dient und das wenigstens einen Teil der die Volumenvergrößerung bewirkenden Formänderung des Reservoirs (28; 128) durch eine Verkürzung der axialen Erstreckung des Reservoirs zwischen zwei gegenüberliegenden Wandungen des Tanks bewirkt wird.

2. Kraftstofftank nach Anspruch 1, **dadurch gekennzeichnet, dass** das Reservoir einen geschlossenen Raum begrenzt, dessen Wandungen lediglich Durchgänge für die kontrollierte Zuleitung und Ableitung des Kraftstoffes aufweisen.

3. Kraftstofftank nach Anspruch 1, **dadurch gekennzeichnet, dass** die das Reservoir seitlich begrenzenden Wände sich zwischen in Einbaulage unterer und oberer Wandung des Tanks erstrecken.

4. Kraftstofftank nach Anspruch 1, **dadurch gekennzeichnet, dass** das Reservoir (28; 128) mit einer den verformbaren Wandungsbereich (26; 126) stützenden Einrichtung (22; 122) versehen ist.

5. Kraftstofftank nach Anspruch 1 oder 4, **dadurch gekennzeichnet, dass** zumindest Teilbereiche der Seitenwände (26; 126) des Reservoirs (28; 128) und/oder die Stützeinrichtung (22; 122) während des Einführens in den Tank unter Spannung verformt sind.

6. Kraftstofftank nach Anspruch 1, **dadurch gekennzeichnet, dass** die unter Spannung verformten Teile des Reservoirs eine Entspannung erfahren, wenn im Tank eine Vergrößerung des Volumens erfolgt.

7. Kraftstofftank nach Anspruch 1 oder 4, **dadurch gekennzeichnet, dass** zumindest Teilbereich der Seitenwände (26; 126) und/oder die Stützeinrichtung (22; 122) des Reservoirs in der Betriebsposition im Tank unter Spannung verformt sind.

8. Kraftstofftank nach Anspruch 1, **dadurch gekennzeichnet, dass** die axiale Erstreckung des Reservoirs nach seiner axialen Verkürzung etwa dem Abstand zwischen einem die Öffnung (14; 114) in der Wandung des Kraftstofftanks verschließenden Verschlusselement und dem diesem gegenüberliegenden Wandbereich (44; 144) des Kraftstofftankes entspricht.

9. Kraftstofftank nach Anspruch 1, **dadurch gekennzeichnet, dass** die Verkürzung der axialen Erstreckung des Reservoirs zu einer Spannung in Teilen desselben führt, die zu einer Verspannung des Reservoirs zwischen zwei gegenüberliegenden Wandungen des Tanks benutzt wird.

10. Kraftstofftank nach Anspruch 1, **dadurch gekennzeichnet, dass** die Volumenvergrößerung des Reservoirs unter der Einwirkung des in ihm befindlichen bzw. in ihn einströmenden Kraftstoffes erfolgt.

11. Kraftstofftank nach Anspruch 1, **dadurch gekennzeichnet, dass** der verformbare Wandbereich in seinem Ausgangszustand vor der Formänderung mit Falten versehen ist, die sich im Zuge der Formänderung zumindest teilweise öffnen.

12. Kraftstofftank nach Anspruch 1, **dadurch gekennzeichnet, dass** der verformbare Wandbereich des Reservoirs (28; 128) aus einem elastisch verformbaren Material besteht.

13. Kraftstofftank nach Anspruch 1, **dadurch gekennzeichnet, dass** der verformbare Wandbereich vorgeformt ist, derart, dass eine axiale Beanspruchung des Reservoirs zu einer Verformung des Reservoirs im Sinne einer Vergrößerung des Volumens desselben führt.

14. Kraftstofftank nach Anspruch 4, **dadurch gekennzeichnet, dass** die Stützeinrichtung (22; 122) nach Einführen des Reservoirs (28; 128) in den Kraftstofftank (10; 110) ebenfalls eine Formänderung erfährt, die der Formänderung des verformbaren Wandbereiches entspricht.

15. Kraftstofftank nach Anspruch 4, **dadurch gekennzeichnet, dass** die elastisch verformbare Stützeinrichtung (22) vorgeformt ist, derart, dass eine axiale Verkürzung des Reservoirs zu einer Verformung der Stützeinrichtung (22; 122) im Sinne einer Vergrößerung des Volumens des Reservoirs (28; 128) führt.

16. Kraftstofftank nach Anspruch 1, **dadurch gekennzeichnet, dass** das Reservoir (218) einen Hohlkörper mit zwei im wesentlichen kegelstumpfförmigen Abschnitten (226a, 226b) aufweist, deren Wandungen mit Falten (274a, 274b) versehen sind, und die kegelstumpfförmigen Abschnitte an ihren einander zugekehrten Bereichen größten Durchmessers miteinander verbunden sind.

17. Kraftstofftank nach Anspruch 16, **dadurch gekennzeichnet, dass** die Falten (274a, 274b) eines Abschnittes (226a bzw. 226b) um die Hälfte der Erstreckung einer Falte in Umfangsrichtung des Reservoirs gegenüber den Falten (274a, 274b) des jeweils anderen Abschnittes (226a, 226b) versetzt angeordnet sind.

18. Kraftstofftank nach Anspruch 17, **dadurch gekennzeichnet, dass** die Tiefe der Falten (274a, 274b) entlang ihrem Verlauf vom jeweiligen Ende des Reservoirs in Richtung auf dessen Bereich mit dem größten Querschnitt zunimmt.

19. Kraftstofftank nach Anspruch 16, **dadurch gekennzeichnet, dass** das Reservoir (218) mit einem sich in Richtung der Längsachse desselben erstreckenden Abschnitt (278) versehen ist, in welchem die Falten (274a, 275b) beider im wesentlichen kegelstumpfförmigen Abschnitte (226a, 226b) einander überlappen, und die äußeren Scheitellinien (280a, 280b) der Falten (274a, 274b) des jeweils einen im wesentlichen kegelstumpfförmigen Abschnittes (226a, 226b) jeweils in die inneren Scheitellinien (282a, 282b) der Falten (274a bzw. 274b) des jeweils anderen kegelstumpfförmigen Abschnittes (226a bzw. 226b) übergehen.

20. Kraftstofftank nach Anspruch 16, **dadurch gekennzeichnet, dass** der Hohlkörper des Reservoirs (218) aus Kunststoff im Blasverfahren hergestellt ist und der fertige Hohlkörper, der im wesentlichen faltenbalgartig ausgebildet ist, eine Gestalt aufweist, die der Funktionsgestalt des Reservoirs (218) im Kraftstofftank (210) entspricht.

21. Kraftstofftank nach Anspruch 1, **dadurch gekennzeichnet, dass** er mit einem Füllrohr (160) versehen ist, dessen ausströmseitiges Ende mit einer am Reservoir (128) befindlichen Eintrittsöffnung (166) verbunden ist und das Reservoir (128), innerhalb dessen eine motorisch angetriebene Kraftstoffpumpe angeordnet ist, in seinem oberen Bereich mit zumindest einer Überlauföffnung versehen ist, durch welche Kraftstoff aus dem Reservoir (128) in den dieses umgebenden Bereich des Tankes einlaufen kann.

22. Kraftstofftank nach Anspruch 15, **dadurch gekennzeichnet, dass** die Eintrittsöffnung (166) an einem (121) der starren Bauteile des Reservoirs (128) angebracht ist.

23. Kraftstofftank nach Anspruch 15, **dadurch gekennzeichnet, dass** am Boden (120) des Reservoirs (128) außerhalb desselben und diesem gegenüber abgedichtet ein Raum (152) vorgesehen ist, innerhalb dessen eine Strahlpumpe (154, 156) angeordnet ist, deren Treibdüse (154) mit einer Rücklaufleitung (138) verbunden ist, durch die wenigstens ein Teil des von der motorisch angetriebenen Pumpe (132) geförderten Kraftstoffes zurückgeführt wird, und an der der Treibdüse (154) gegenüberliegenden Fangdüse (156) eine nach oben in das Reservoir sich erstreckende Überlaufleitung (158) angeschlossen ist.

24. Kraftstofftank nach Anspruch 1, **dadurch gekennzeichnet, dass** er an seinem der Öffnung (14) gegenüberliegenden Wandbereich (44) mit einem Sitz (46) für die Fördereinheit (18) versehen ist.

25. Kraftstofftank nach Anspruch 1, **dadurch gekennzeichnet, dass** das Reservoir (28; 128) gegenüber dem es umgebenden Tankraum derart abgedichtet ist, dass im Reservoir immer eine definierte Mindestmenge an Kraftstoff vorhanden ist, die lediglich dann unterschritten werden kann, wenn das das Reservoir umgebende Volumen des Kraftstofftankes im wesentlichen leer ist.

## Claims

1. A fuel tank for a motor vehicle, which is provided with a smaller reservoir (28; 128) which is arranged therein and which is inserted into the fuel tank (10; 110) through a closable opening (14; 114) in the wall (12; 112) of the fuel tank (10; 110) and is connected thereto, wherein the reservoir (28; 128) is adapted to be deformable at least over surface portions of its boundary wall in such a way that, after it has been at least partially introduced into the fuel tank (10; 110), it experiences a change in shape which leads to an increase in its volume within the fuel tank and a change in its cross-section such that the largest cross-section of the reservoir (28; 128) in its operative position is larger than the cross-section of the opening in the fuel tank, which is available for introduction of the reservoir, wherein the reservoir (28; 128) which is preferably of a round cross-section is delimited by firm components (20, 21; 120, 121) at its two ends of which one end which is the lower end in the installed position is supported against a tank wall and the deformable wall surfaces are arranged in the region between the firm components at the ends of the reservoir, **characterised in that** the firm component delimiting the reservoir (28; 128) at the upper end in the installed position serves at the same time as a closure means for the opening (14; 114) in the tank wall (12; 112) and the at least one part of the change in shape of the reservoir (28; 128) which causes the increase in volume is produced by a reduction in the axial extent of the reservoir between two oppositely disposed walls of the tank.

2. A fuel tank according to claim 1 **characterised in that** the reservoir delimits a closed space, the walls of which only have apertures therethrough for the controlled feed and discharge of the fuel.

3. A fuel tank according to claim 1 **characterised in that** the walls laterally defining the reservoir extend between walls of the tank which are lower and upper walls in the installed position.

4. A fuel tank according to claim 1 **characterised in that** the reservoir (28; 128) is provided with a device (22; 122) supporting the deformable wall region (26; 126).

5. A fuel tank according to claim 1 or claim 4 **characterised in that** the at least portions of the side walls (26; 126) of the reservoir (28; 128) and/or the support device (22; 122) are deformed under stress during introduction into the tank.

6. A fuel tank according to claim 1 **characterised in that** the parts of the reservoir which are deformable under stress experience a relief of stress when an increase in the volume occurs in the tank.

7. A fuel tank according to claim 1 or claim 4 **characterised in that** at least portions of the side walls (26; 126) and/or the support device (22; 122) of the reservoir are deformed under stress in the operative position in the tank.

8. A fuel tank according to claim 1 **characterised in that** the axial extent of the reservoir after the axial reduction thereof approximately corresponds to the spacing between a closure element closing the opening (14; 114) in the wall of the fuel tank and the wall region (44; 144) of the fuel tank, which is in opposite relationship to the closure element.

9. A fuel tank according to claim 1 **characterised in that** the reduction in the axial extent of the reservoir leads to a stressing in parts thereof, which stressing is used for bracing of the reservoir between two oppositely disposed walls of the tank.

10. A fuel tank according to claim 1 **characterised in that** the increase in volume of the reservoir occurs under the effect of the fuel therein or flowing into same.

11. A fuel tank according to claim 1 **characterised in that** the deformable wall region in its initial condition prior to the change in shape is provided with folds which at least partially open in the course of the change in shape.

12. A fuel tank according to claim 1 **characterised in that** the deformable wall region of the reservoir (28; 128) comprises an elastically deformable material.

13. A fuel tank according to claim 1 **characterised in that** the deformable wall region is pre-shaped in such a way that an axial loading on the reservoir results in deformation of the reservoir to cause an increase in the volume thereof.

14. A fuel tank according to claim 4 **characterised in that** the support device (22; 122) after introduction of the reservoir (28; 128) into the fuel tank (10; 110) also experiences a change in shape which corresponds to the change in shape of the deformable wall region.

15. A fuel tank according to claim 4 **characterised in that** the elastically deformable support device (22) is pre-shaped in such a way that an axial reduction in the reservoir results in deformation of the support device (22; 122) such as to cause an increase in the volume of the reservoir (28; 128).

16. A fuel tank according to claim 1 **characterised in that** the reservoir (128) has a hollow body with two substantially frustoconical portions (226a, 226b), the walls of which are provided with folds (274a, 274b), and the frustoconical portions are connected together at their mutually facing regions of largest diameter.

17. A fuel tank according to claim 16 **characterised in that** the folds (274a, 274b) of a portion (226a and 226b respectively) are arranged displaced relative to the folds (274a, 274b) of the respective other portion (226a, 226b) by half the extent of a fold in the peripheral direction of the reservoir.

18. A fuel tank according to claim 17 **characterised in that** the depth of the folds (274a, 274b) increases along the extent thereof from the respective end of the reservoir in a direction towards the region thereof of the largest cross-section.

19. A fuel tank according to claim 16 **characterised in that** the reservoir (218) is provided with a portion (278) which extends in the direction of the longitudinal axis thereof and in which the folds (274a, 275b) of two substantially frustoconical portions (226a, 226b) overlap each other, and the outer apex lines (280a, 280b) of the folds (274a, 274b) of the respective one substantially frustoconical portion (226a, 226b) go into the inner apex lines (282a, 282b) of the folds (274a and 274b respectively) of the respective other frustoconical portion (226a and 226b respectively).

20. A fuel tank according to claim 16 **characterised in that** the hollow body of the reservoir (218) is produced from plastic material by blow moulding and the finished hollow body of a substantially bellow-like shape is of a configuration corresponding to the functional configuration of the reservoir (218) in the fuel tank (210).

21. A fuel tank according to claim 1 **characterised in that** it is provided with a filling pipe (160) whose outflow end is connected to an intake opening (166) disposed at the reservoir (128), and the reservoir (128), within which is arranged a motor-driven fuel pump, is provided in its upper region with at least one overflow opening through which fuel can pass out of the reservoir (128) into the region of the tank surrounding the reservoir.

22. A fuel tank according to claim 15 **characterised in that** the intake opening (166) is mounted to one (121) of the rigid components of the reservoir (128).

23. A fuel tank according to claim 15 **characterised in that** provided at the bottom (120) of the reservoir (128) outside same and sealed in relation thereto is a chamber (152) within which is arranged a jet pump (154, 156) whose propulsion nozzle (154) is connected to a return conduit (138) through which at least a part of the fuel delivered by the motor-driven pump (132) is returned, and connected to the catch nozzle (156) in opposite relationship to the propulsion nozzle (154) is an overflow conduit (158) extending upwardly into the reservoir.

24. A fuel tank according to claim 1 **characterised in that** at its wall region (44) opposite the opening (14) it is provided with a seat (46) for the delivery unit (18).

25. A fuel tank according to claim 1 **characterised in that** the reservoir (28; 128) is sealed off with respect to the tank space surrounding it in such a way that there is always a defined minimum amount of fuel in the reservoir, wherein the fuel level can fall below said minimum amount only when the volume of the fuel tank surrounding the reservoir is substantially empty.

## Revendications

1. Réservoir de carburant pour un véhicule automobile, muni d'un réservoir plus petit (28, 128) placé à l'intérieur, inséré dans celui-ci par une ouverture située dans la paroi (12, 112) du réservoir de carburant (10, 110) et pouvant être obturée (14, 114) et relié à ce dernier, sachant qu'au moins des surfaces primitives de référence de la paroi de délimitation du réservoir permettent au réservoir (28, 128) de se déformer de telle sorte qu'après avoir été introduit, au moins, en partie, dans le réservoir de carburant (10, 110), il subit une déformation conduisant à une augmentation de son volume au sein du réservoir de carburant et à une modification de sa section transversale de telle sorte que la plus grande section transversale du réservoir (28, 128) est, dans sa position de fonctionnement, plus grande que la section transversale de l'ouverture dans le réservoir de carburant, disponible pour l'insertion du réservoir, sachant que le réservoir (28, 128) présentant de préférence une section transversale circulaire est délimité, au niveau de ses deux extrémités dont une extrémité inférieure, en position de montage, est appuyée contre une paroi du réservoir, par des composants rigides (20, 21, 120, 121) et que les surfaces aptes à la déformation de la paroi sont situées dans la zone entre les composants rigides, au niveau des extrémités du réservoir, **caractérisé en ce que** le composant rigide délimitant le réservoir (28, 128) en partie supérieure, en position de montage, sert en même temps d'obturateur pour l'ouverture (14, 114) dans la paroi du réservoir (12, 112) et qu'il occasionne au moins une partie de la déformation du réservoir (28, 128) provoquant l'augmentation du volume, de par un raccourcissement de l'extension axiale du réservoir entre deux parois opposées du réservoir.

2. Réservoir de carburant selon la revendication 1, **caractérisé en ce que** le réservoir circonscrit un espace fermé dont les parois comportent uniquement des passages pour l'amenée et l'évacuation contrôlées du carburant.

3. Réservoir de carburant selon la revendication 1, **caractérisé en ce que** les parois délimitant latéralement le réservoir s'étendent entre la paroi supérieure et la paroi inférieure du réservoir en position de montage.

4. Réservoir de carburant selon la revendication 1, **caractérisé en ce que** le réservoir (28, 128) est muni d'un dispositif (22, 122) soutenant une zone de paroi (26, 126) apte à la déformation.

5. Réservoir de carburant selon la revendication 1 ou 4, **caractérisé en ce qu'**au moins des zones partielles des parois latérales (26, 126) du réservoir (28, 128) et/ou le dispositif de support (22, 122) est/sont apte(s) à la déformation sous contrainte pendant l'insertion dans le réservoir.

6. Réservoir de carburant selon la revendication 1, **caractérisé en ce que** les parties aptes à la déformation sous contrainte du réservoir subissent une atténuation des tensions en cas d'augmentation de volume dans le réservoir.

7. Réservoir de carburant selon la revendication 1 ou 4, **caractérisé en ce qu'**au moins une zone partielle des parois latérales (26, 126) et/ou le dispositif de support (22, 122) du réservoir est/sont, dans le réservoir, apte(s) à la déformation sous contrainte, en position de fonctionnement.

8. Réservoir de carburant selon la revendication 1, **caractérisé en ce que** l'extension axiale du réservoir, après son raccourcissement axial, correspond à peu près à l'espacement entre un élément d'obturation obturant l'ouverture (14, 114) dans la paroi du réservoir de carburant et la zone de paroi (44, 144) du réservoir de carburant opposée audit élément.

9. Réservoir de carburant selon la revendication 1, **caractérisé en ce que** le raccourcissement de l'extension axiale du réservoir occasionne une contrainte, utilisée pour déformer le réservoir entre deux parois opposées du réservoir, dans des parties de celui-ci.

10. Réservoir de carburant selon la revendication 1, **caractérisé en ce que** l'augmentation du volume du réservoir se produit sous l'effet du carburant se trouvant ou plus précisément, affluant dans celui-ci.

11. Réservoir de carburant selon la revendication 1, **caractérisé en ce que** la zone de paroi apte à la déformation est pourvue, dans son état initial, avant la déformation, de plis qui s'ouvrent, au moins en partie, en fonction de la déformation.

12. Réservoir de carburant selon la revendication 1, **caractérisé en ce que** la zone de paroi, apte à la déformation, du réservoir (28, 128) est composée d'un matériau élastique, apte à la déformation.

13. Réservoir de carburant selon la revendication 1, **caractérisé en ce que** la zone de paroi apte à la déformation est préformée de telle sorte qu'une sollicitation axiale du réservoir occasionne une déformation du réservoir, dans le sens d'une augmentation du volume de celui-ci.

14. Réservoir de carburant selon la revendication 4, **caractérisé en ce que** le dispositif de support (22, 122) subit également, après la mise en place du réservoir (28, 128) dans le réservoir de carburant (10, 110), une déformation correspondant à celle de la zone de paroi apte à la déformation.

15. Réservoir de carburant selon la revendication 4, **caractérisé en ce que** le dispositif de support (22) élastique et apte à la déformation est préformé de telle sorte qu'un raccourcissement axial du réservoir occasionne une déformation du dispositif de support (22, 122), dans le sens d'une augmentation du volume du réservoir (28, 128).

16. Réservoir de carburant selon la revendication 1, **caractérisé en ce que** le réservoir (218) présente un corps creux avec deux sections essentiellement en forme de tronc de cône (226a, 226b) dont les parois présentent des plis (274a, 274b), les sections en forme de tronc de cône étant raccordées l'une à l'autre au niveau de leur diamètre le plus grand, côté adjacent.

17. Réservoir de carburant selon la revendication 16, **caractérisé en ce que** les plis (274a, 274b) d'une section (226a ou 226b) sont situés de façon décalée de la moitié de l'extension d'un pli dans le sens périphérique du réservoir par rapport aux plis (274a, 274b) de l'autre section (226a, 226b).

18. Réservoir de carburant selon la revendication 17, **caractérisé en ce que** la profondeur des plis (274a, 274b) augmente, le long de leur tracé, à partir de chacune des extrémités du réservoir vers la zone avec la section transversale la plus grande.

19. Réservoir de carburant selon la revendication 16, **caractérisé en ce que** le réservoir (218) comporte une section (278) s'étendant en direction de l'axe longitudinal de celui-ci, dans laquelle les plis (274a, 275b) des deux sections essentiellement en forme de tronc de cône (226a, 226b) s'imbriquent et **en ce que** les lignes extérieures des sommets (280a, 280b) des plis (274a, 274b) de chacune des sections essentiellement en forme de tronc de cône (226a, 226b) deviennent, à chaque fois, les lignes intérieures des sommets (282a, 282b) des plis (274a ou 274b) de l'autre section essentiellement en forme de tronc de cône (226a ou 226b).

20. Réservoir de carburant selon la revendication 16, **caractérisé en ce que** le corps creux du réservoir (218) est en matière synthétique et obtenu par soufflage et **en ce que** le corps creux fini, essentiellement conçu comme un soufflet, présente une forme correspondant à la forme fonctionnelle du réservoir (218) dans le réservoir de carburant (210).

21. Réservoir de carburant selon la revendication 1, **caractérisé en ce qu'**il est pourvu d'un tuyau de remplissage (160), dont l'extrémité, côté sortie, est reliée à une ouverture d'entrée (166), située au niveau du réservoir (128) et **en ce que** le réservoir (128), au sein duquel est placée une pompe de carburant commandée par moteur, est équipé, dans sa partie supérieure, d'au moins une ouverture de déversement à travers laquelle le carburant provenant du réservoir (128) peut s'écouler dans la zone du réservoir entourant celui-ci.

22. Réservoir de carburant selon la revendication 15, **caractérisé en ce que** l'ouverture d'entrée (166) est placée au niveau d'un (121) des composants rigides du réservoir (128).

23. Réservoir de carburant selon la revendication 15, **caractérisé en ce qu'**il est prévu au niveau du fond (120) du réservoir (128), un espace (152) situé à l'extérieur de ce dernier, isolé de celui-ci et renfermant une pompe à jet (154, 156) dont la buse de poussée (154) est reliée à une conduite de recyclage (138), à travers laquelle au moins une partie du carburant refoulée par la pompe commandée par moteur (132) est remise en circulation et **en ce qu'**une conduite de trop-plein (158), s'étendant vers le haut dans le réservoir, est raccordée au niveau de l'orifice récepteur (156) faisant face à la buse de poussée (154).

24. Réservoir de carburant selon la revendication 1, **caractérisé en ce qu'**il est muni, au niveau de sa zone de paroi (44) opposée à l'ouverture (14), d'un siège (46) pour l'unité de refoulement (18).

25. Réservoir de carburant selon la revendication 1, **caractérisé en ce que** le réservoir (28, 128) est isolé de l'espace du réservoir l'entourant de telle sorte qu'une quantité minimum définie de carburant est toujours présente dans le réservoir, celle-ci pouvant être ensuite inférieure uniquement si le volume du réservoir de carburant entourant le réservoir est essentiellement vide.
